**Europäisches Patentamt**

**European Patent Office**

**Office européen des brevets**

(11) Publication number: **0 174 111**
**B1**

(12) **EUROPEAN PATENT SPECIFICATION**

(45) Date of publication of patent specification: **02.01.91**

(51) Int. Cl.⁵: **G 11 B 23/033**

(21) Application number: **85305702.4**

(22) Date of filing: **12.08.85**

(54) **Shuttering mechanism for a cassette.**

(30) Priority: **20.08.84 JP 126000/84**

(43) Date of publication of application:
**12.03.86 Bulletin 86/11**

(45) Publication of the grant of the patent:
**02.01.91 Bulletin 91/01**

(84) Designated Contracting States:
**DE FR GB NL**

(56) References cited:
**GB-A-2 101 794**
**GB-A-2 103 862**
**GB-A-2 113 890**

(73) Proprietor: **SONY CORPORATION**
**7-35 Kitashinagawa 6-Chome Shinagawa-ku
Tokyo 141 (JP)**

(72) Inventor: **Nakanishi, Hiroshi c/o Sony
Corporation
Patent Department 6-7-35 Kitashinagawa
Shinagawa-ku Tokyo 141 (JP)**

(74) Representative: **Purvis, William Michael
Cameron et al
D. Young & Co. 10 Staple Inn
London WC1V 7RD (GB)**

Courier Press, Leamington Spa, England.

## Description

The invention relates to a shuttering mechanism for a cassette.

To avoid recording media such as magnetic discs from becoming incapable of recording and playing back due to dust or finger grease accumulating on the recording surface, magnetic discs are usually housed within a cassette which protects the recording surface from such contaminants. During recording or playback, a record/playback head comes into contact with the magnetic disc via a window built into the cassette. To prevent dust and such from entering the cassette and to prevent fingers from coming into contact with the surface of the magnetic disc via the window, a shutter is added to the cassette to expose and cover the window so that the record/playback head can be brought into contact with the magnetic disc when the shutter is in the open position when the cassette is in use.

However, if an operator fails to close the shutter when the cassette is taken out of the cassette holder, the shutter does not serve its function.

In a conventional shuttering mechanism, a spring is provided on the cassette to bias the shutter towards its closed position and the shutter is opened against the spring force when the cassette is inserted into the cassette holder for recording or playback. When the cassette is taken out of the cassette holder, the shutter is automatically closed due to the spring force.

However, this is disadvantageous in that the spring biasing the shutter toward its closed position adds to the size and weight of cassettes intended for use in small-sized lightweight record/playback apparata. In addition, it takes time to mount these extra parts on the cassette so that the cost of manufacturing such a cassette is increased. Since the cassette is mass-produced and used in large quantities, even a slight increase in the cost incurs an extremely large profit loss.

Japanese Published Patent Application No. Sho 51-23,167 published on July 15, 1976, discloses another shuttering mechanism in which a swing lever is installed on the cassette holder. When one end of the swing lever is pushed by the cassette, the other end thereof is pivoted toward the cassette and engages a groove formed in the shutter, and as the cassette is then moved within the cassette holder, the shutter is opened or closed automatically.

However, this shuttering mechanism has a drawback in that since it is difficult to control the timing at which the free end of the swing lever moves toward the cassette, one end of the swing lever or the other may slide abrasively along the outer frame of the cassette if the timing is even slightly wrong. Since the outer frame of the cassette is usually made of a synthetic resin, resin dust generated due to abrasion by the swing lever may be deposited on the record/playback apparatus. This dust may subsequently get into the cassette and adhere to the recording surface of the magnetic disc.

Patent Application GB—A—2 103 862 discloses a shutter in a cassette wherein the shutter is coupled to a flexible member slidable in grooves in inner walls of the cassette and effective to rotate the shutter about a centre hub to open or close windows for a recording head. An outwardly projecting protrusion on the flexible member is provided in a groove in the cassette and is accessible to an engagement member which can be moved by a solenoid to open or close the shutter after the cassette is loaded into playing apparatus.

According to the invention there is provided a shuttering mechanism for a cassette, comprising:

(a) a shutter on the cassette for covering and exposing a window through which a recording medium of the cassette can be accessed;

(b) first means on the cassette for holding the shutter in its closed position in which the window is covered and comprising a lock pawl formed on the shutter and a cutout in one end of a shutter lock lever pivotally mounted on the cassette and for receiving the lock pawl;

(c) second means on a cassette holder of a cassette recording/playback apparatus for releasing the shutter held by the first means from its closed position when the cassette is inserted into the cassette recording/playback apparatus, the second means comprising a projection formed on the cassette holder and to press the shutter lock lever so as to disengage the lock pawl from the cutout as the cassette is inserted into the cassette holder; and

(d) third means comprising a shutter closer pivotally mounted on the cassette holder and having a first end to engage in an engagement aperture provided in the shutter and a second end to be pressed against the cassette as the cassette is inserted into the cassette holder and thereby to generate a biasing force biasing the first end toward the cassette to cause the first end to engage in the engagement aperture of the shutter immediately before the lock pawl is disengaged from the cutout, the first end being effective, upon ejection of the cassette from the cassette holder, to pull the shutter to its closed position.

The shuttering mechanism of the invention requires no strict dimensional accuracy and requires no special mechanism in the cassette but automatically moves the shutter to its closed position when the cassette is ejected from a cassette holder without damage to the cassette.

The invention is diagrammatically illustrated by way of example with reference to the accompanying drawings, in which:.

Figure 1 is a partial cutaway plan view of a cassette embodying a shuttering mechanism according to the invention;

Figure 2 is a plan rear view of the reverse side of the cassette shown in Figure 1;

Figure 3 is an edge-on view of the cassette shown in Figures 1 and 2;

Figure 4 is an elevation of a cassette holder embodying a shuttering mechanism according to the invention;

Figure 5 is an enlarged view in partial section of part of the cassette holder shown in Figure 4;

Figure 6 is a top plan view of the cassette holder shown in Figures 4 and 5; and

Figures 7(A) through 7(E) are cutaway views of part of the embodiment shown in Figures 1 through 6 for explaining the operation of a shuttering mechanism according to the invention.

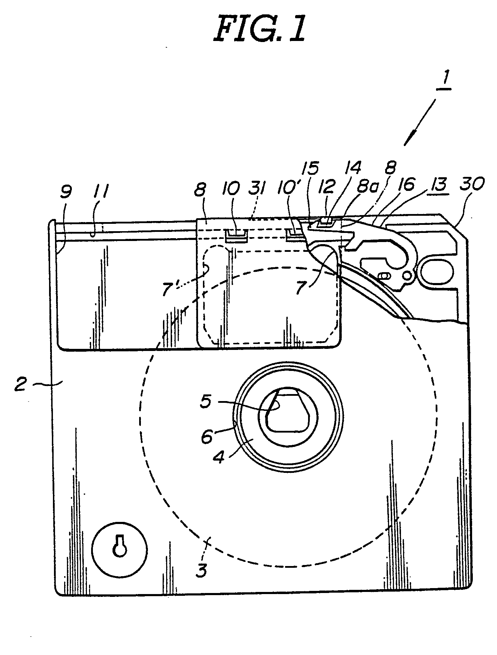

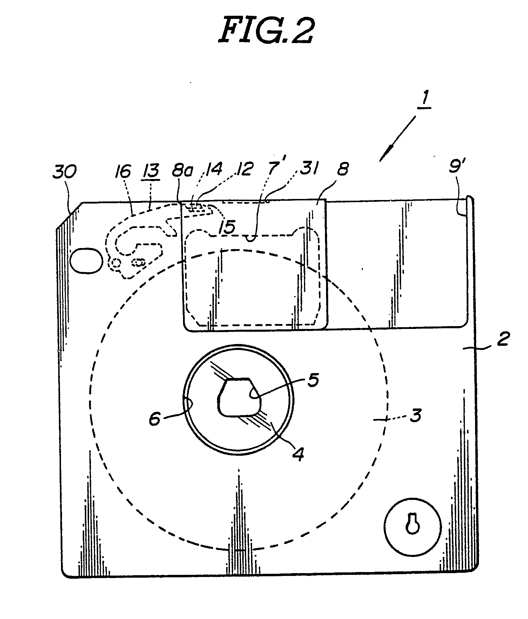

First, the construction of a cassette will be described with reference to Figures 1 to 3.

Referring to Figures 1 to 3, a magnetic disc cassette 1 comprises a cassette frame 2 made of a synthetic resin within which a magnetic disc is rotatably housed. A central core 4 is attached to the centre of the magnetic disc 3 and an engagement hole 5 is formed at the centre of the central core 4. The central core 4 is exposed via central holes 6 in the centre of the cassette frame 2.

Front and rear windows 7, 7' are provided near the upper edge of the cassette frame 2 and through which the magnetic disc 3 may be accessed. A shutter 8 can cover and/or expose the windows 7, 7'. The shutter 8 is made of thin sheet metal folded over the top edge of the cassette frame 2 so as to have two parallel plates. Shallow recesses 9, 9' are formed along the tops of both sides of the cassette frame 2, including the windows 7, 7', to receive the shutter 8. The shutter 8 is mounted on the cassette frame 2 so as to be free to slide along the shallow recesses 9, 9'. Sliders 10 and 10' are formed by cutting out tabs near the upper edge of one surface of the shutter 8 and engaging them in a guide groove 11 extending parallel to the upper edge of the cassette frame 2. A lock pawl 12 is formed by cutting another tab out of the upper edge of the shutter 8. A shutter lock lever 13 is made of a semi-elastic synthetic resin and is mounted near the upper edge of the cassette frame 2 with its lower end fixed to a pivot in the cassette frame 2. An engagement cutout 14 is formed in the upper edge of the lock lever 13. When the shutter 8 is moved to the closed position, the lock pawl 12 of the shutter 8 engages in the engagement cutout 14 so that the shutter 8 is locked in its closed position. The engagement cutout 14 of the shutter lock lever 13 is tapered to facilitate movement of the shutter 8 towards the closed position and to prevent movement in the opposite direction.

As the shutter 8 moves from its open position to its closed position, a tapered tip 15 of the lock lever 13 abuts the lower edge of the lock pawl 12 to ensure engagement between the engagement cutout 14 and the lock pawl 12 as the shutter lock lever 13 pivots downwards due to its flexibility. Once the lock pawl 12 is engaged with the engagement cutout 14, some other means is needed to disengage the lock pawl 12 from the engagement cutout 14 by flexing the tip of the shutter lock lever 13 downwardly. The upper surface 16 of the shutter lock lever 13 opposite the tip 15 is canted at an angle with respect to the upper edge of the cassette frame 2.

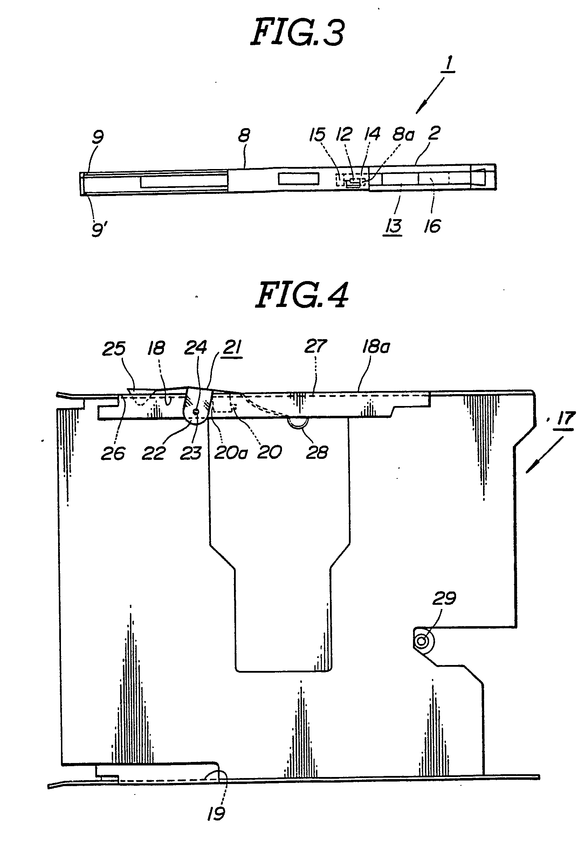

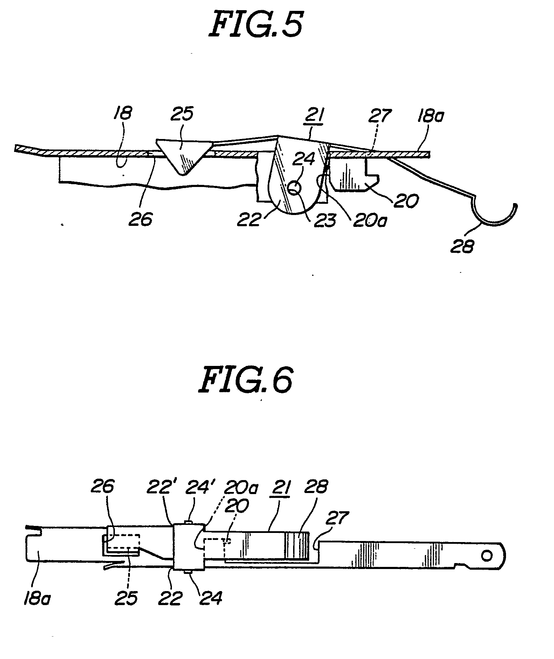

Figure 4 to Figure 6 show a construction of a cassette holder.

Figure 4, shows a cassette holder 17 of a record/playback unit (not shown). Guide grooves 18, 19 extend across and to either side of the upper and lower edges of the cassette holder 17 respectively. The cassette 1 is loaded into the cassette holder 17 so that the upper and lower edges of the cassette 1 slide along the guide grooves 18, 19 respectively, during insertion and removal of the cassette.

A lock release 20 projects downwardly from the upper edge 18a of the upper guide groove 18.

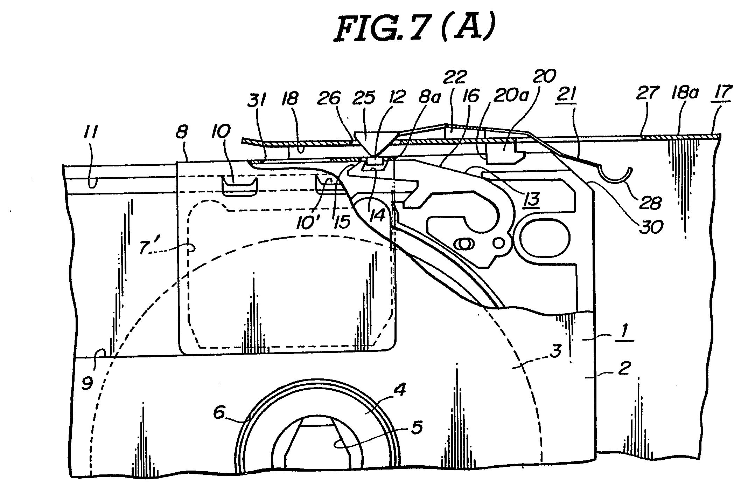

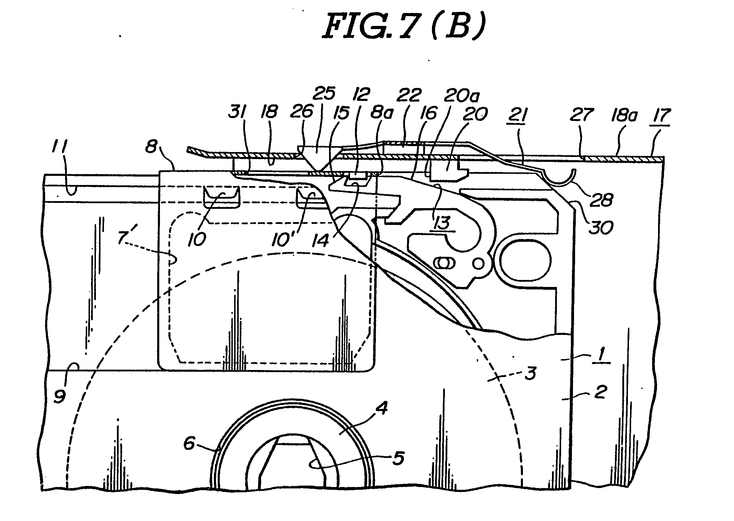

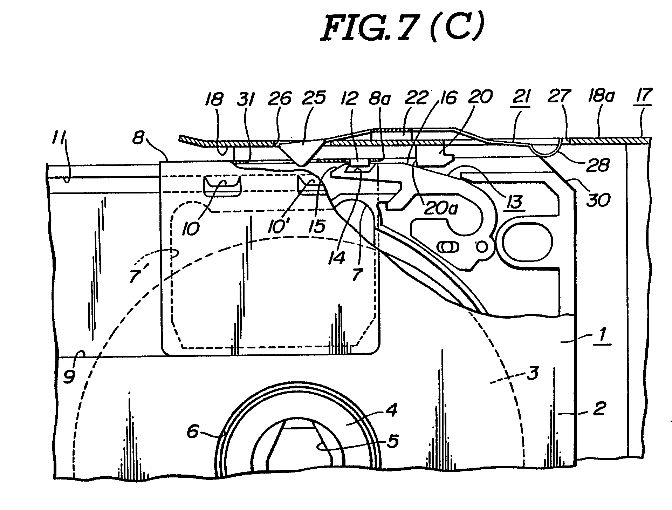

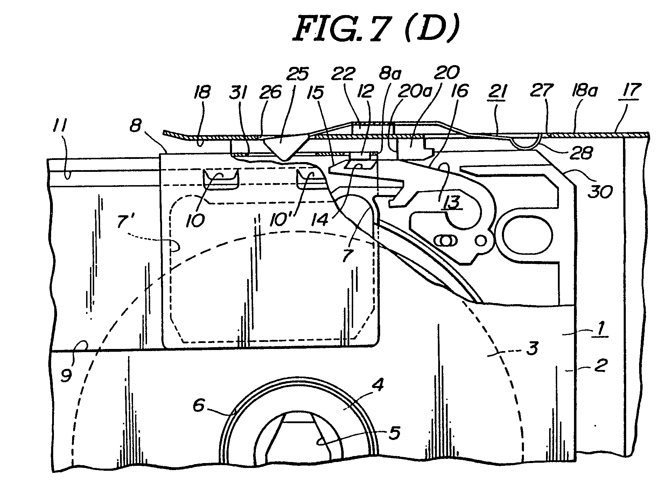

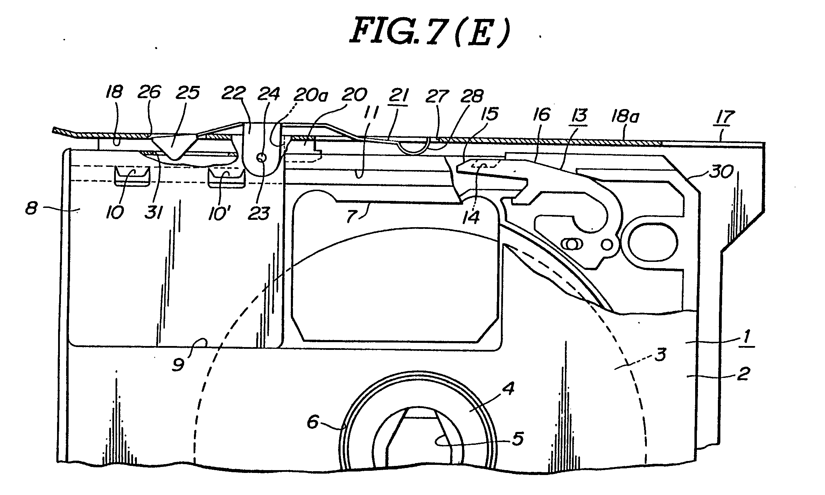

As the magnetic disc cassette 1 is smoothly inserted into the cassette holder 17, the lock release 20 presses against the angled surface 16 of the shutter lock lever 13 of the cassette 1, whereby the lock pawl 12 of the shutter 8 is disengaged from the engagement cutout 14 of the lock lever 13 due to downward flexure of the shutter lock lever 13 (refer to Figure 7(D)). The leading edge 20a of the lock release 20 then abuts the leading edge 8a of the shutter 8. Thereafter, as the cassette 1 is further inserted into the cassette holder 17, the shutter 8 is moved toward the open position (refer to Figure 7(E)) by the lock release 20.

A shutter closer 21 is formed of an elastic or resilient material. Supporting pieces 22 are bent so as to project downward from the centres of the edges of the shutter closer 21. Small holes 23 through the supporting pieces 22 engage small projections 24 formed on both sides of the guide groove 18. Thus, the shutter closer 21 is free to pivot through a small range near the upper edge of the cassette holder 17.

An engagement tongue 25 projects downward from one free end of the shutter closer 21. The engagement tongue 25 extends into the interior of the guide groove 18 through a slot 26 formed in the upper edge of the guide groove 18.

The other free end of the shutter closer 21, on the other side of the pivot axis to the engagement tongue 25, is bent slightly downward into the guide groove 18 through a cutout 27 in the upper edge 18a of the guide groove 18. The tip 28 of the other end of the shutter closer 21 is rounded to form a contact surface.

A press pin 29 deep in the cassette holder 17 cooperates with biasing means (not shown) to bias the cassette 1 out of the cassette holder 17.

The operation of the above-described shutter mechanism will now be described with reference to Figures 7(A) through 7(E).

As the cassette 1 is inserted into the cassette holder 17 (refer to Figure 7(a)), the contact end 28 of the shutter closer 21 first abuts an angled upper-inside corner 30 of the cassette frame 2 and is moved upwardly by the angled surface 30 as the cassette moves inwards (refer to Figure 7(B)).

Although the engagement tongue 25 of the shutter closer 21 is urged downwardly, that end of the shutter closer 21 is merely biased in that direction since the engagement tongue 25 is already in close contact with the upper edge 8a of the shutter 8.

As the cassette 1 moves further inwardly (to the right as viewed in Figure 7), the engagement tongue 25 of the shutter closer 21 drops into an engagement aperture 31 formed in the shutter 8 just before the lock pawl 12 of the shutter 8 is disengaged from the engagement cutout 14 of the lock lever 13. The biasing force energy stored in the shutter closer 21 causes the engagement tongue 25 securely to engage in the engagement aperture 31 of the shutter 8 (refer to Figure 7(C)).

The lock release 20 then moves the shutter 8 to the open position (refer to Figure 7(E)). It should be noted that although the biasing force of the press pin 29 serving to eject the cassette 1 to the removal position is available, the biasing force is not applied to the cassette 1 unless cassette removal is ordered by other means (not shown).

When the cassette 1 is ejected from the cassette holder 17, the shutter 8 is operated in the reverse manner to that in which it is operated when inserted into the holder 17. Thus, as the cassette 1 is ejected (from the position shown in Figure 7(E)), the engagement tongue 25 engaged with the engagement aperture 31 of the shutter 8 pulls the shutter 8 to the closed position as shown in Figure 7(D). Then, after the lock pawl 12 of the shutter 8 engages the engagement cut-out 14 of the shutter lock lever 13, as shown in Figure 7(C), the engagement end of the shutter closer 21 is flexed upward so that the engagement tongue 25 moves out of engagement with the engagement aperture 31 of the shutter 8. It should be noted that the engagement tongue 25 is triangular so as to allow smooth disengagement of the engagement tongue 25 from the engagement aperture 31.

In this way, the cassette 1 is ejected from the holder 17 with the shutter 8 secured in place over the windows 7, 7' by the lock lever 13. It should be noted that although the cassette 1 is ejected in the removed direction by the biasing force stored in the press pin 29, the cassette 1 stops in the position shown in Figure 7(C) since the engagement tongue 25 of the shutter closer 21 is engaged in the engagement aperture 31 of the shutter 8. An operator may then grip the part of cassette 1 which protrudes out of the holder 17 in order to remove the cassette 1.

In this way, even if the biasing force applied to the cassette 1 by the press pin 29 is relatively strong, the cassette 1 will not be abruptly ejected all the way out of the cassette holder 17.

In the construction described above, as the cassette is ejected from the holder, the shutter is automatically closed without the need for a spring in the cassette. In addition, since the lock release means is elastic, the biasing energy due to contact between the cassette and the second end of the shutter closer is stored in the form of elastic deformation of the lock release means until the first end coincides with the engagement aperture of the shutter so that the cassette will not be abraded by the lock release means.

Since the first end is engaged with the engagement aperture of the shutter, the shutter is completely closed with the cassette taken out of the cassette holder even when the cassette is taken out with the cassette not completely inserted into the cassette holder.

Furthermore, once the cassette has been fully inserted into the cassette holder, even if the shutter was only half-open, the shutter can completely be closed when the cassette is removed from the cassette holder since the shutter closer will engage the engagement aperture of the shutter.

Although the embodiment described relates to a shuttering mechanism for a magnetic disc cassette, the invention is applicable extensively to shuttering mechanisms for cassettes of other kinds.

**Claims**

1. A shuttering mechanism for a cassette (1), comprising:

(a) a shutter (8) on the cassette for covering and exposing a window (7) through which a recording medium of the cassette (1) can be accessed;

(b) first means (12, 14) on the cassette for holding the shutter (8) in its closed position in which the window (7) is covered and comprising a lock pawl (12) formed on the shutter (8) and a cutout (14) in one end of a shutter lock lever (13) pivotally mounted on the cassette (1) and for receiving the lock pawl (12);

(c) second means (20) on a cassette holder (17) of a cassette recording/playback apparatus for releasing the shutter (8) held by the first means (12) from its closed position when the cassette (1) is inserted into the cassette recording/playback apparatus, the second means comprising a projection (20) formed on the cassette holder (17) and to press the shutter lock lever (13) so as to disengage the lock pawl (12) from the cutout (14) as the cassette (1) is inserted into the cassette holder (17); and

(d) third means comprising a shutter closer (21) pivotally mounted on the cassette holder (17) and having a first end (25) to engage in an engagement aperture (31) provided in the shutter (8) and a second end (28) to be pressed against the cassette (1) as the cassette (1) is inserted into the cassette holder (17) and thereby to generate a biasing force biasing the first end (25) toward the cassette (1) to cause the first end (25) to engage in the engagement aperture (31) of the shutter (8) immediately before the lock pawl (12) is disengaged from the cutout (14), the first end (25) being effective, upon ejection of the cassette (1) from the cassette holder (17), to pull the shutter (B) to its closed position.

2. A shuttering mechanism according to claim 1, wherein the shutter closer (21) is resiliently deformable.

3. A shuttering mechanism according to claim 1 or claim 2, wherein the first end of the shutter closer (21) has a triangular shaped tongue (25) projecting toward the cassette (1).

**Patentansprüche**

1. Verschlußmechanismus für eine Kassette (1), bestehend aus

(a) einem Verschlußteil (8) an der Kassette zum Abdecken und zur Freigabe eines Fensters (7), durch das auf ein Aufzeichnungsmedium in der Kassette (1) zugegriffen werden kann,

(b) ersten Mitteln (12, 14) an der Kassette zum Halten des Verschlußteils (8) in seiner Schließstellung, in der das Fenster (7) abgedeckt ist, wobei diese ersten Mittel einen an dem Verschlußteil (8) ausgebildeten Verriegelungsstift (12) und eine Ausnehmung (14) zur Aufnahme des Verriegelungsstifts (12) umfassen, die in einem Endbereich eines an der Kassette (1) schwenkbar montierten Verschluß-Verriegelungshebels (13) ausgebildet ist,

(c) zweiten Mitteln (20) an einem Kassettenhalter (17) eines Kassetten-Aufnahme/Wiedergabegeräts zum Lösen des von den ersten Mitteln (12) gehaltenen Verschlußteils (8) aus seiner Schließstellung, wenn die Kassette (1) in das Kassetten-Aufnahme/Wiedergabegerät eingesetzt wird, wobei die zweiten Mittel einen an dem Kassettenhalter (17) ausgebildeten Ansatz (20) umfassen, der derart auf den Verschluß-Verriegelungshebel (13) drückt, daß der Verriegelungsstift (12) sich beim Einsetzen der Kassette (1) in den Kassettenhalter (17) aus der genannten Ausnehmung (14) löst, und

(d) dritten Mitteln (17) mit einem Verschlußteil-Schließer (21), der an dem Kassettenhalter (17) schwenkbar montiert ist und einen ersten Endbereich (25) für den Eingriff in eine an dem Verschlußteil (8) vorgesehene Eingriffsöffnung (31) sowie einen zweiten Endbereich (28) aufweist, der beim Einsetzen der Kassette in den Kassettenhalter (17) gegen die Kassette (1) drückt und dadurch eine Vorspannkraft erzeugt, durch der der erste Endbereich (25) in Richtung auf die Kassette (1) so vorgespannt wird, daß diese erste Endbereich (25) in die Eingriffsöffnung (31) des Verschlußteils (8) eingreift, unmittelbar bevor der Verriegelungsstift (12) aus der Ausnehmung (14) gelöst wird, wobei der erste Endbereich (25) beim Auswerfen der Kassette (1) aus dem Kassettenhalter (17) bewirkt, daß das Verschlußteil (8) in seine Schließstellung gezogen wird.

2. Verschlußmechanismus nach Anspruch 1, bei dem der Verschlußteil-Schließer (21) elastisch verformbar ist.

3. Verschlußmechanismus nach Anspruch 1 oder 2, bei dem der erste Endbereich des Verschlußteil-Schließers (21) eine dreieckförmige Zunge (25) besitzt, die in Richtung auf die Kassette (1) vorsteht.

**Revendications**

1. Mécanisme d'obturation pour une cassette (1) comportant:

(a) un obturateur (8) sur la cassette pour couvrir et découvrir une fenêtre (7) par laquelle on peut accéder à un support d'enregistrement de la cassette (1);

(b) des premiers moyens (12, 14) sur la cassette pour maintenir l'obturateur (8) dans sa position fermée dans laquelle la fenêtre (7) est couverte, comprenant un cliquet de verrouillage (12) formé sur l'obturateur (8) ainsi que, à l'une des extrémités d'un levier (13) de verrouillage de l'obturateur monté sur la cassette (1) avec liberté de pivotement, une découpe (14) prévue pour recevoir le cliquet de verrouillage (12);

(c) des seconds moyens (20) sur un porte-cassette (17) d'un appareil d'enregistrement/lecture de cassette pour déverrouiller l'obturateur (8), maintenu par les premiers moyens (12), d'avec sa position fermée lorsque l'on insère la cassette (1) dans l'appareil d'enregistrement (lecture de la cassette), les seconds moyens comprenant une saillie (20) formée sur le porte-cassette (17) et prévue pour presser le levier (13) de verrouillage de l'obturateur de façon à sortir le cliquet de verrouillage (12) hors de la découpe (14) lorsque l'on insère la cassette (1) dans le porte-cassette (17); et

(d) des troisièmes moyens comprenant un ferme-obturateur (21) monté, avec liberté de pivotement, sur le porte-cassette (17) et présentant une première extrémité (25) prévue pour s'engager dans une ouverture d'engagement (31) prévue dans l'obturateur (10) et une seconde extrémité (28) qui vient se presser contre la cassette (1) lorsque l'on insère la cassette (1) dans le porte-cassette (17) et crée de ce fait une force de contrainte qui contraint la première extrémité (25) en direction de la cassette (1) pour faire que la première extrémité (25) s'engage dans l'ouverture d'engagement (31) de l'obturateur (8) immédiatement avant que le cliquet de verrouillage (12) sorte hors de la découpe (14), la première extrémité (25) étant efficace, lors de l'éjection de la cassette (1) hors du porte-cassette (17), pour tirer l'obturateur (10) dans sa position fermée.

2. Mécanisme d'obturation selon la revendication 1, dans lequel le ferme-obturateur (21) est déformable élastiquement.

3. Mécanisme d'obturation selon la revendication 1 ou la revendication 2, dans lequel la première extrémité du ferme-obturateur (21) présente une languette (25) de forme triangulaire débordant en direction de la cassette (1).

# FIG.1

# FIG.2

## *FIG.3*

## *FIG.4*

# FIG.5

# FIG.6

FIG.7 (A)

FIG. 7 (B)

EP 0 174 111 B1

# FIG. 7 (C)

EP 0 174 111 B1

# FIG. 7 (D)

# FIG. 7 (E)

EP 0 174 111 B1